# EUROPEAN PATENT APPLICATION

(11) **EP 2 055 880 A2**
(43) Date of publication of application: **06.05.2009**
(21) Application number: 08167626.4
(22) Date of filing: 27.10.2008
(51) Int. Cl.: E05F 15/10, E05F 15/12

(54) **Swing gate**

(30) Priority: 31.10.2007 IT VE20070039 U
(71) Applicant: Cardin Elettronica S.p.A., 31020 San Vendemiano (Prov. of Treviso) (IT)
(72) Inventor: CARDIN, Giancarlo, 31020, SAN PIETRO DI FELETTO TV (IT)
(74) Representative: Modiano, Micaela Nadia

(57) **Abstract**

A swing gate (1), comprising at least one leaf (2) which is associated at one end with a hollow shaft (3), which in turn is rotatably connected to a fixed structure (4); a gearmotor (11) is axially associated with the hollow shaft (3) to move the at least one leaf (2) with respect to the fixed structure (4) and is provided with release means (15) which can be accessed by the user to achieve the free opening of the leaf (2).

## Description

The present invention relates to a swing gate.

Swing gates are currently known which are constituted by one or more leaves which are hinged at one end to a fixed structure, such as for example a wall; to automatically open and close the leaf, actuation devices are known which are constituted by a gearmotor, which is enclosed in an appropriately provided casing that is fixed to the fixed structure proximate to the leaf, and to which the first end of an appropriately provided arm is connected, such arm being constituted by two mutually articulated levers and being fixed to the leaf at its other end.

The activation of the gearmotor, controlled by the user by means of an appropriately provided remote control, imparts to the arm a suitable rotary translational motion, which modifies the mutual angular position between the two levers that constitute it, opening or closing the leaf.

Actuation devices are also known which are constituted by a telescopic rod, which contains a gearmotor that is adapted to selectively modify the rod's length, a first end of the rod being associated rotatably with the front or rear surface of the leaf, and a second end being associated rotatably with the fixed structure to which the leaf is hinged, about a hinge axis that is parallel and spaced with respect to the hinge axis of such leaf.

By operating the gearmotor by means of a suitable remote control, it is possible to modify the length of the telescopic arm, thus causing the closure or opening of the leaf associated with it.

Both known types of actuation device described above, however, have drawbacks; the installation of these known types of device in fact must be performed after installing the gate and is very complex and laborious, affecting negatively the installation times and costs of such gate.

Further, once applied to the gate, these known types of actuation device protrude from the leaf and from the fixed structure, negatively affecting the overall aesthetics of the gate.

Moreover, such known types of device comprise moving parts that are accessible also during the opening and closing of the gate, with the consequent risk of injuring anyone who might accidentally come into contact with them during these operations.

Actuation devices for swing gates are also known which are constituted by a gearmotor that is accommodated in a casing that is buried proximate to the fixed structure to which the leaf is hinged; an arm is connected to such gearmotor and is constituted by appropriately provided levers which are mutually articulated, such arm being fixed, at one of its ends, to the lower surface of the leaf.

However, this known type of actuation device, despite affecting the overall aesthetics of the gate less than the ones described earlier, has drawbacks: burying the gearmotor in fact requires the provision of appropriately provided foundations and of an inspection manhole for the gearmotor, with a consequent increase in complexity, costs and times for installation.

Further, although the arm that connects the gearmotor to the leaf is connected to the lower surface of the latter, it is nonetheless accessible, with the consequent risk of possible tampering or damage thereto.

Further, if it is necessary to achieve manual opening of the leaf, it is necessary to have an appropriately provided wrench in order to act on a device for releasing the arm from the leaf.

The aim of the present invention is to solve the above-mentioned problems, eliminating the drawbacks of the cited background art, by providing a device that allows to achieve the opening and closing of a swing gate, reducing the complexity, times and costs for its installation.

Within this aim, an object of the invention is to provide a device that allows to achieve the opening and closing of a swing gate while reducing any risks for people who are proximate thereto.

Another object of the invention is to not affect the overall aesthetics of the gate or of the fixed structure with which the latter is associated.

Another object of the present invention is to provide a swing gate that is structurally simple, has low manufacturing costs and allows easy and quick release of the leaf for manual opening thereof.

This aim and these and other objects, which will become better apparent hereinafter, are achieved by a swing gate, comprising at least one leaf which is associated at one end with a hollow shaft, which in turn is rotatably connected to a fixed structure, characterized in that a gearmotor is axially associated with said hollow shaft to move said at least one leaf with respect to said fixed structure provided with release means which can be accessed by the user to achieve the free opening of said leaf.

Further characteristics and advantages of the invention will become better apparent from the following detailed description of a preferred but not exclusive embodiment thereof, illustrated by way of non-limiting example in the accompanying drawings, wherein:

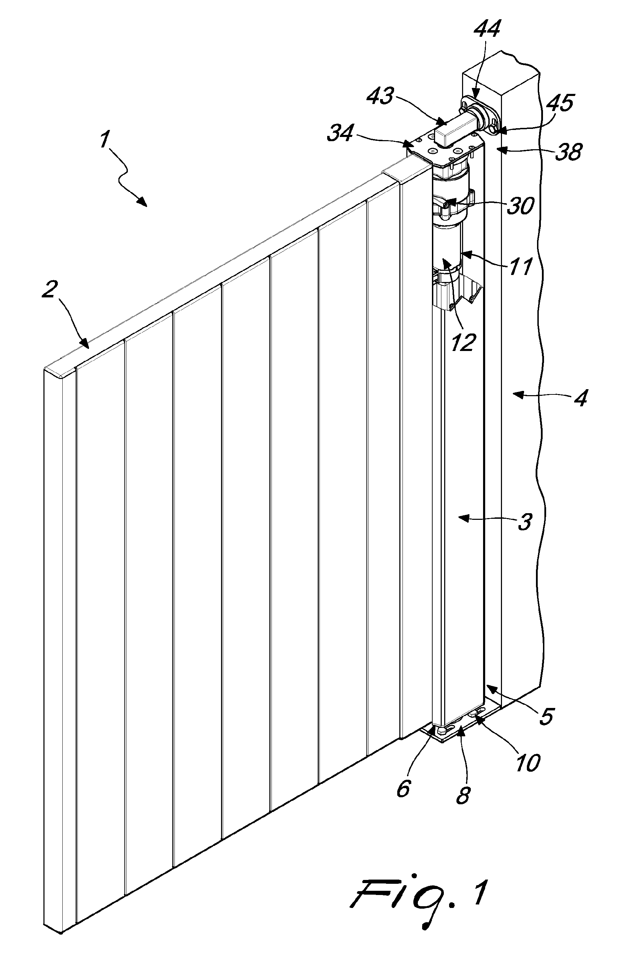

Figure 1 is a perspective cutout view of a swing gate according to the invention;

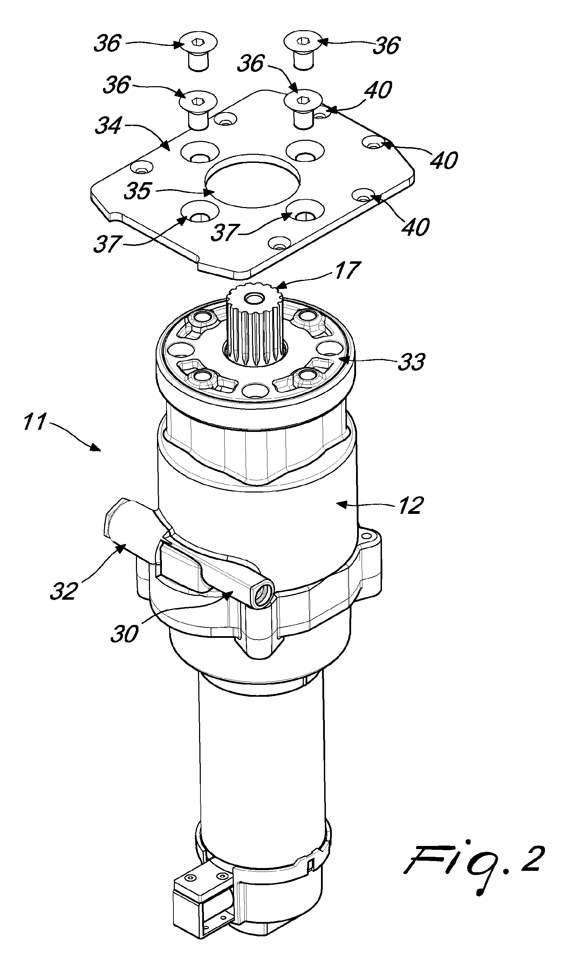

Figure 2 is a perspective view of a gearmotor of the leaf according to the invention and of a base with which it can be fixed before they are mutually fixed;

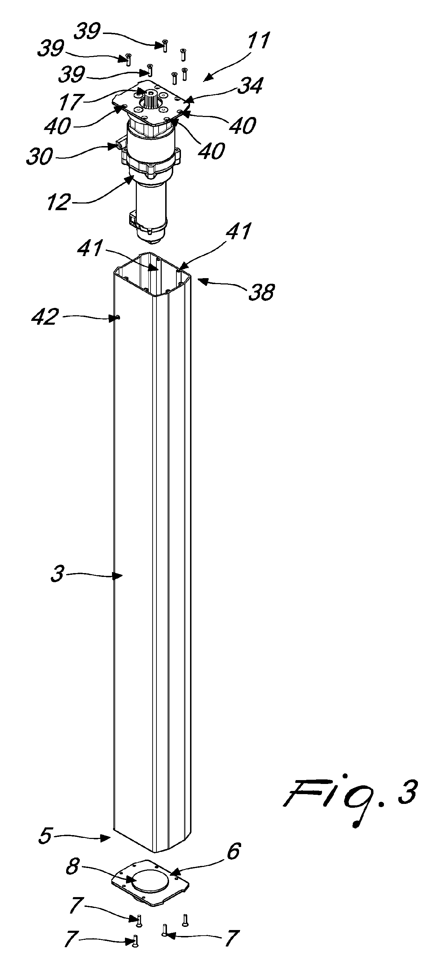

Figure 3 is a perspective view of the gearmotor of Figure 2 prior to its insertion in a hollow shaft of the swing gate according to the invention;

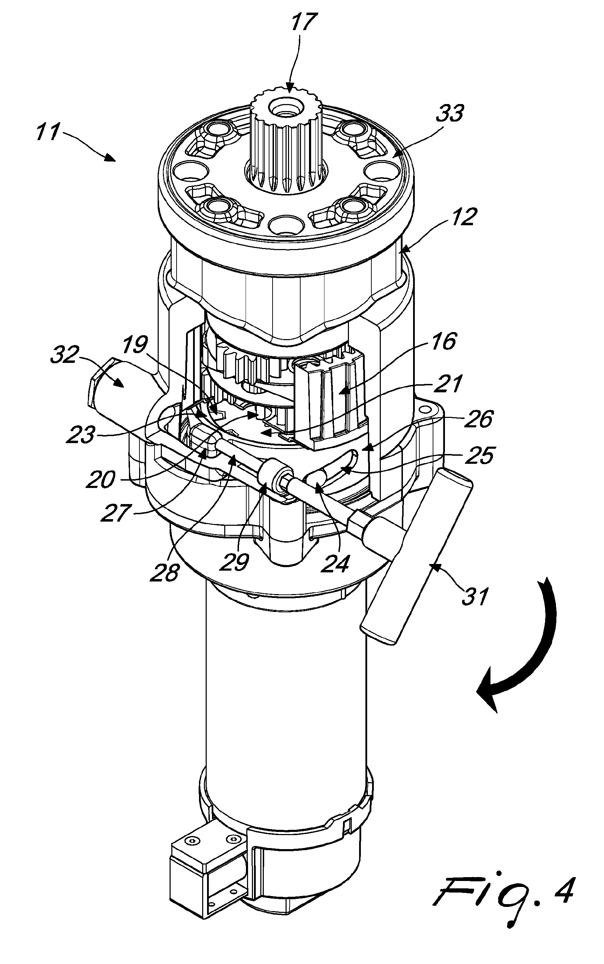

Figure 4 is a perspective cutout view of the gearmotor of the preceding figures during its release;

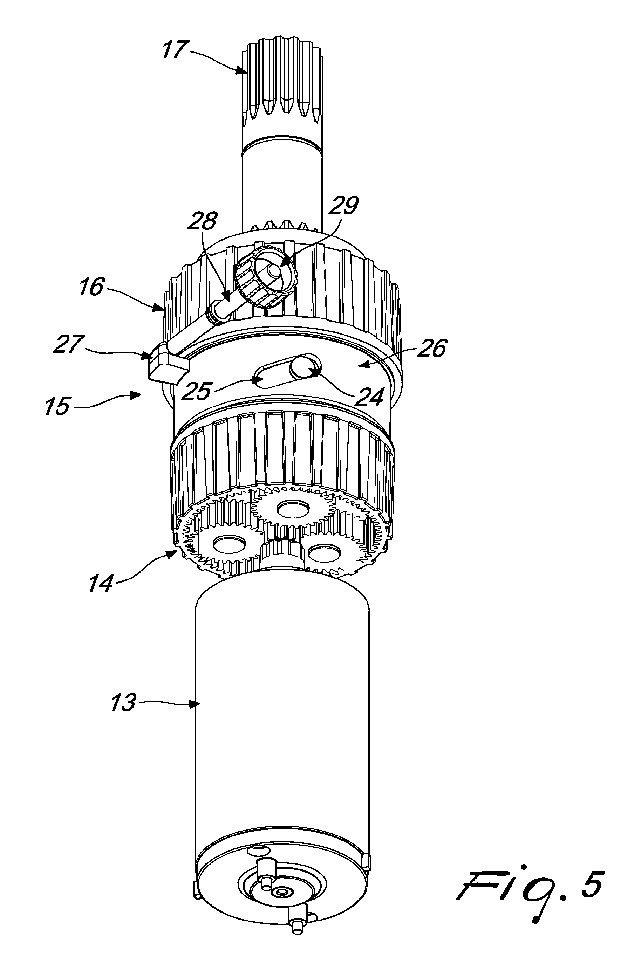

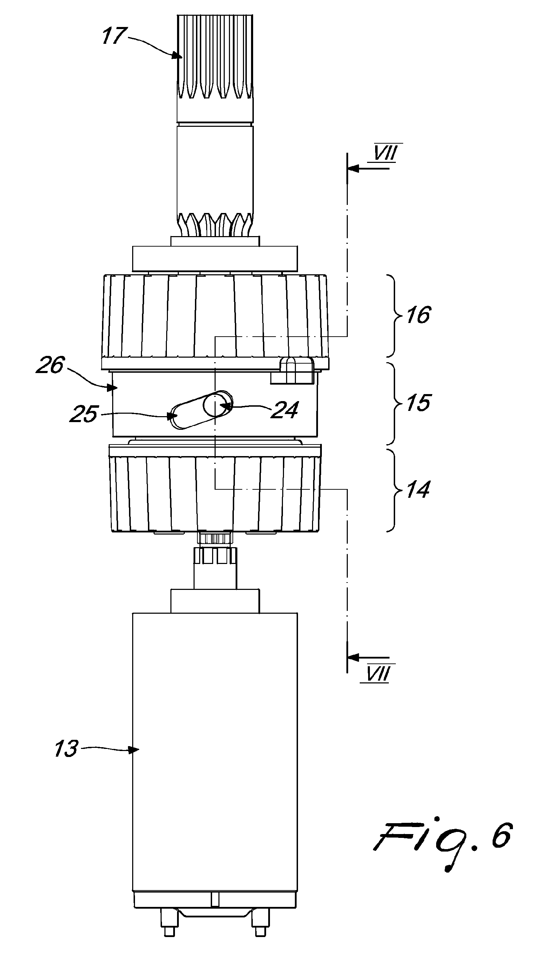

Figures 5 and 6 are respectively a perspective view and a side view of the gearmotor of the preceding figures, without the containment casing;

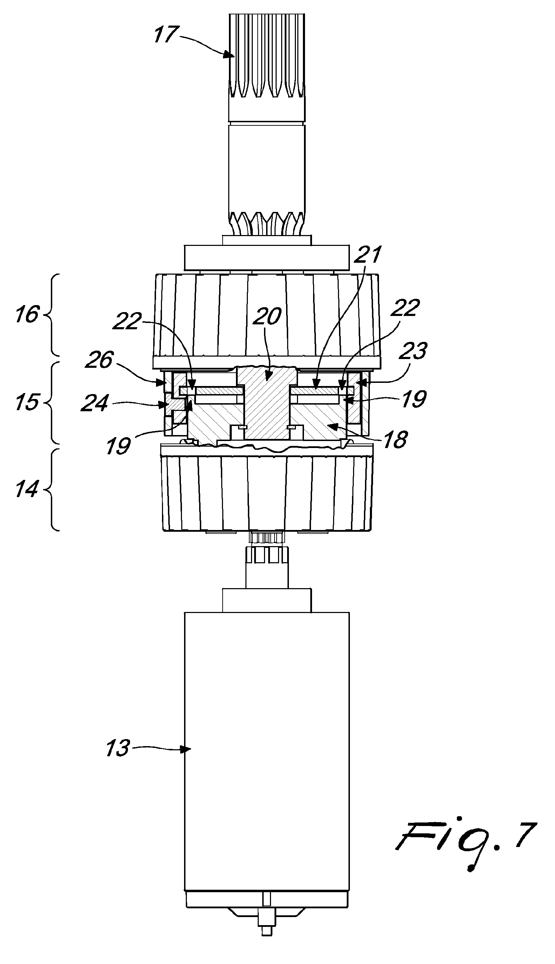

Figure 7 is a view of the gearmotor of the preceding figures, without the containment casing, in a partially sectional side view, taken along the sectional line VII-VII of Figure 6, in the release condition;

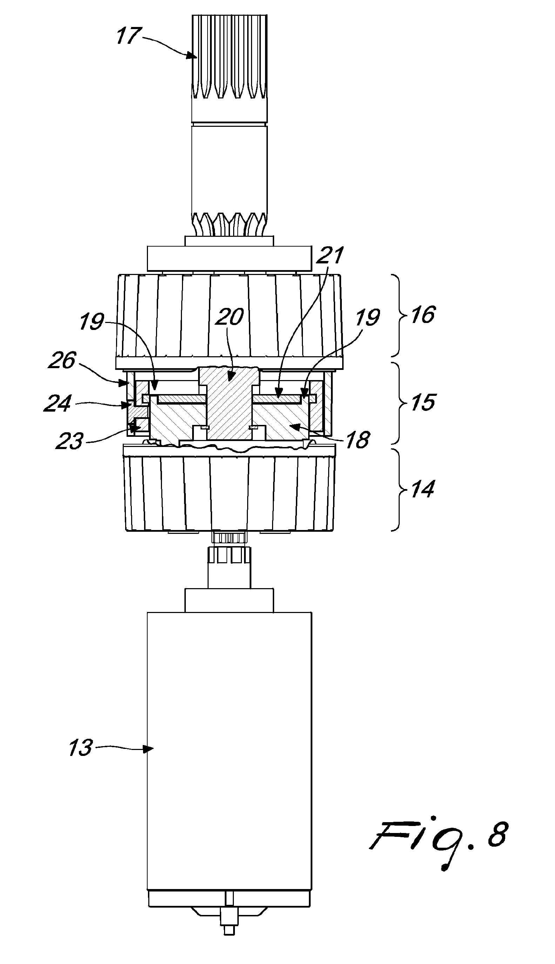

Figure 8 is a view, similar to the preceding one, of the gearmotor without the containment casing in the operating condition;

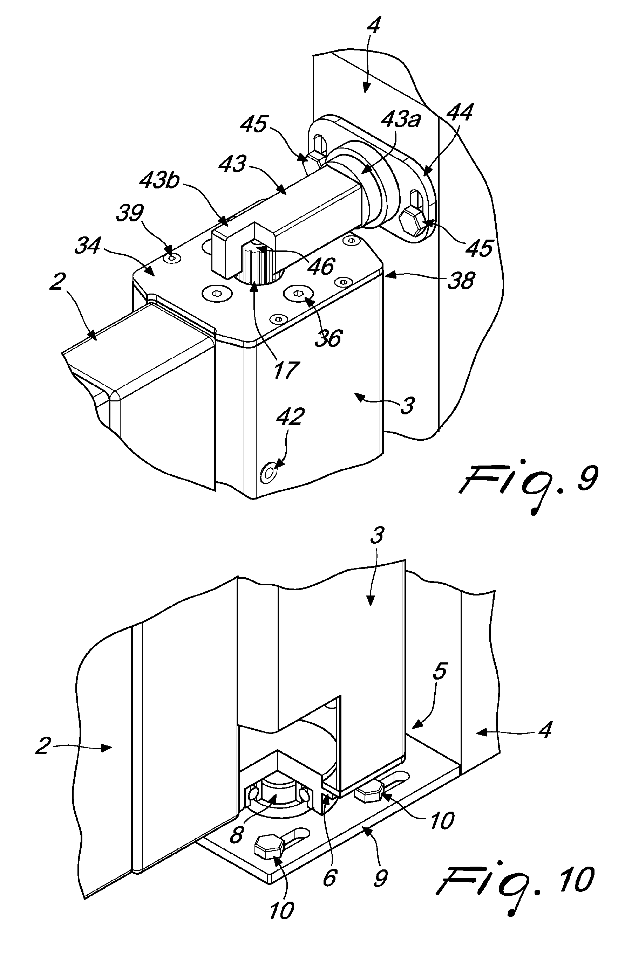

Figures 9 and 10 are a perspective view and a cutout view of two details of the swing gate according to the invention.

In the exemplary embodiments that follow, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

With reference to the figures, the reference numeral 1 designates a swing gate that comprises at least one leaf 2, which has a chosen shape and is associated at one end with a hollow shaft 3, which in turn is connected rotatably to a fixed structure 4, such as for example a wall of a building or an enclosing wall or a column.

The leaf 2 can be fixed to the lateral surface of the hollow shaft 3, for example by welding, or by means of appropriately provided brackets, not shown in the accompanying figures; fixing of the leaf 2 to the hollow shaft 3 can be performed either directly during installation of the gate or beforehand, during the step for providing the leaf 2 and/or the hollow shaft 3.

The hollow shaft 3 is constituted preferably by an advantageously metallic profile, which has a preferably but not necessarily approximately rectangular transverse cross-section, with preferably rounded transverse ends.

The hollow shaft 3 can be closed, at its lower end 5, by an appropriately provided cover 6, which is substantially flat and can be fixed detachably to the hollow shaft 3 for example by means of appropriately provided first screws 7; advantageously, means for pivoting to the ground are associated with the cover 6 and are constituted for example by a bearing 8 of a known type, which rotatably connects the cover 6 to a plate 9 that can be fixed to the ground by way of known fixing means, such as for example appropriately provided first bolts 10.

Within the hollow shaft 3, a gearmotor 11 is associated axially and is adapted to move the hollow shaft 3 with respect to the fixed structure 4 and has release means that can be accessed by a user to open freely the leaf 2.

Advantageously, the gearmotor 11 is constituted by a casing 12, which is preferably approximately cylindrical and has such dimensions that it can be accommodated within the hollow shaft 3, and accommodates an electric motor 13 that is adapted to actuate a first epicyclic gear system 14.

Advantageously, the first epicyclic gear system 14 is connected, on the opposite side with respect to the electric motor 13, to a release stage 15, which constitutes such release means to achieve the free opening of the leaf 2, which in turn is connected to a second epicyclic gear system 16, to the output stage of which, not shown in the accompanying figures, a toothed rotating shaft 17 is connected which protrudes axially from the casing 12.

Advantageously, the release stage 15 comprises an appropriately provided disk-like element 18, which is jointly connected for rotation to the output stage, not shown in the accompanying figures, of the first epicyclic gear system 14, which has appropriately provided teeth 19 that protrude at right angles to it on the opposite side with respect to the first epicyclic gear system 14.

The disk-like element 18 is rotatably associated freely with a rotating shaft 20, which transmits motion to the input stage, not shown in the accompanying figures, of the second epicyclic gear system 16.

The rotating shaft 20 supports a disk 21, which is jointly connected for rotation to the rotating shaft 20 and can slide longitudinally thereto; the disk 21 is provided with slots 22 that are suitable for the detachable insertion of the teeth 19 in order to jointly connect for rotation the disk-like element 18 and the disk 21.

The perimetric edge of the disk 21 is slidingly associated freely, within an appropriately provided annular groove, not shown in the accompanying figures, which is formed in the inner lateral surface of an appropriately provided first ring 23, which is arranged coaxially to the disk 21.

At least one pin 24 protrudes radially outward from the outer lateral surface of the first ring 23 and optionally is associated rotatably with the first ring 23, which is is arranged slidingly on an appropriate guide or slot 25 provided, along an axis that is inclined with respect to the longitudinal axis of the rotating shaft 20, on the lateral surface of a second ring 26, which is arranged coaxially to the first ring 23.

Means are provided which are adapted to turn the second ring 26 with respect to the first ring 23, so as to produce the sliding of the at least one pin 24 in the respective guide or slot 25, and the consequent translational motion of the disk 21, longitudinally with respect to the rotating shaft 20, in order to engage or disengage the teeth 19 of the disk-like element 18 in the slots 22 of the disk 21; such means are constituted by a protrusion 27 that protrudes from the outer lateral surface of the second ring 26, against which the free end of a shank 28 of an appropriately provided second screw 29 abuts, the screw 29 being rotatably associated in an appropriately provided first seat 30 formed in the casing 12.

By turning the screw 29 in an appropriate direction, by means of an appropriately provided wrench or lever 31, the screw 29 advances toward the protrusion 27, which is thus pushed in the opposite direction with respect to the screw 29, causing the rotation of the second ring 26; the pin 24 thus slides within the guide or slot 25, causing the translational motion of the disk 21 in the opposite direction with respect to the disk-like element 18, so as to cause the protrusion of the teeth 19 of the latter from the slots 22 of the disk 21 and disengage the rotation of the second epicyclic gear system 16 (and therefore of the rotating shaft 17) from the rotation of the first epicyclic gear system 14 (and therefore of the electric motor 13).

Advantageously, the advancement of the protrusion 27 in the opposite direction with respect to the screw 29 is contrasted by appropriately provided elastic means, such as for example an appropriately provided spring, not shown in the accompanying figures, which is inserted in an appropriately provided receptacle 32 provided in the casing 12.

Advantageously, on the casing 12 of the gearmotor 11, proximate to rotating shaft 17, there is a flange 33, which is adapted to fix the gearmotor 11 to a plate 34, which is preferably flat and in which a through opening 35 is provided which is adapted to allow the passage of the rotating shaft 17.

The plate 34 can be fixed to the flange 33 of the gearmotor 11 preferably by means of appropriately provided third screws 36, which can be inserted in appropriately provided first holes 37 formed therein.

Advantageously, the plate 34 is shaped so that, with the gearmotor 11 associated therewith, it can be fixed to close an upper end 38 of the hollow shaft 3, with the gearmotor 11 arranged inside it; in this condition, the rotating shaft 17 of the gearmotor 11 protrudes longitudinally from the hollow shaft 3 at its upper end 38.

Advantageously, the plate 34, with the gearmotor 11 associated therewith, can be fixed to the upper end 38 of the hollow shaft 3 by way of appropriately provided fourth screws 39, which can be inserted in appropriately provided second holes 40, formed in the plate 34, and can be screwed into appropriately provided complementarily threaded second seats 41, provided at the upper end 38 of the hollow shaft 3.

Advantageously, on the lateral surface of the hollow shaft 3 there is, in such a position as to face, during use, the inlet of the first seat 30, a third hole 42, which is adapted to allow insertion of the wrench or lever 31 in the first seat 30.

Advantageously, the swing gate 1 comprises means for keying the free end of the rotating shaft 17 to a fixed structure 4, which are constituted for example by an appropriately provided arm 43, which can be fixed approximately at right angles to the fixed structure 4 by way of suitable fixing means of a known type, such as for example an appropriately provided plate 44, which is fixed, for example by welding, to a first end 43 a of the arm 43 and can be fixed to the fixed structure for example by way of second bolts 45.

The arm 43 has, at its second end 43b, an appropriately provided third seat 46, which is shaped approximately complementarily, in plan view, to the toothed rotating shaft 17, within which the latter can be inserted and fixed.

Use of the invention is therefore as follows.

With reference to the accompanying figures, after associating the gearmotor 11 with the plate 34, the gearmotor 11 can be fixed within the hollow shaft 3 by coupling the plate 34 to the upper end 38 of the shaft 3.

The electric power supply conductors, not shown in the accompanying figures, of the gearmotor 11 can also be inserted within the hollow shaft 3, and exit from the hollow shaft 3 through appropriately provided openings, also not shown.

A leaf 2 can then be fixed to the hollow shaft 3, for example by welding.

After fixing the plate 9 and the arm 43 to one fixed structure 4, the hollow shaft 3, with the leaf 2 associated therewith and with the gearmotor 11 inside it, can be associated rotatably with the plate 9 by means of the bearing 8, and the rotating shaft 17 can be keyed within the third seat 46 of the arm 43.

The electrical conductors that exit from the hollow shaft 3 can then be connected to the electrical system of the fixed structure 4.

With the disk 21 of the release stage 15 arranged in such a position that the teeth 19 of the disk-like element 18 are inserted in the slots 22 of the disk 21, by operating the electric motor 13, the motor 13 turns the first epicyclic gear system 14, which, by means of the disk-like element 18, turns the disk 21 and therefore the rotating shaft 20 associated therewith.

The rotating shaft 20 then turns the second epicyclic gear system 16, which in turn causes the rotation of the rotating shaft 17; since the latter is keyed to the arm 43, which is rigidly connected to the fixed structure 4, the hollow shaft 3 begins to rotate with respect to the structure 4, thus turning the leaf 2.

If the manual open of the leaf 2 is wanted, it is sufficient to insert the wrench or lever 31, through the third hole 42, in the first seat 30 of the gearmotor 11, in order to disengage the disk 21 from the disk-like element 18, thus disengaging the rotating shaft 17 from the electric motor 13 and therefore allowing to turn the leaf 2 without having to overcome the inertia of the electric motor 13.

It has thus been shown that the invention has achieved the proposed aim and objects, a swing gate having been provided in which the gearmotor can already be associated with the leaf during the manufacture of the leaf and therefore before installing the gate, thus reducing the complexity, times and costs of installation of such gate with respect to the background art.

Further, the gearmotor is not visible from the outside of the gate and therefore does not affect the aesthetic characteristics of the latter.

Moreover, the lack of accessibility of the gearmotor reduces the risks of injury for those who are close to the gate and further protects such gearmotor against any tampering and/or vandalism.

Further, the possibility to release the gearmotor allows to move the leaf manually without having to apply a considerable effort.

Further, the production costs of the gate according to the invention remain low, since it is provided only by means of components that are easy to manufacture and/or assemble.

The invention is of course susceptible of numerous modifications and variations, all of which are within the scope of the appended claims.

The materials used, as well as the dimensions that constitute the individual components of the invention, may of course be more pertinent according to specific requirements.

The various means for performing certain different functions need not certainly coexist only in the illustrated embodiment but can be present per se in many embodiments, including ones that are not illustrated.

The characteristics indicated as advantageous, convenient or the like may also be omitted or be replaced with equivalents.

The disclosures in Italian Utility Model Application No. VE2007U000039 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A swing gate, comprising at least one leaf which is associated at one end with a hollow shaft, which in turn is rotatably connected to a fixed structure, **characterized in that** a gearmotor is axially associated with said hollow shaft to move said at least one leaf with respect to said fixed structure provided with release means which can be accessed by the user to achieve the free opening of said leaf.

2. A swing gate, comprising at least one leaf which is associated at one end with a hollow shaft, which in turn is rotatably connected to a fixed structure, **characterized in that** a gearmotor is axially associated with said hollow shaft to move said at least one leaf with respect to said fixed structure.

3. The gate according to claims 1 or 2, **characterized in that** said leaf can be fixed to said hollow shaft directly during the installation of said gate.

4. The gate according to claims 1 or 2, **characterized in that** said leaf can be fixed to said hollow shaft during the production of said leaf and/or said hollow shaft.

5. The gate according to one or more of the preceding claims, **characterized in that** said leaf can be fixed to the lateral surface of said hollow shaft by welding and/or by means of appropriately provided brackets.

6. The gate according to one or more of the preceding claims, **characterized in that** said hollow shaft is constituted by a profile that has a preferably approximately rectangular transverse cross-section with preferably rounded transverse ends.

7. The gate according to one or more of the preceding claims, **characterized in that** said hollow shaft can be closed, at its lower end, by a substantially flat cover, which can be fixed detachably to said hollow shaft, preferably by means of appropriately provided first screws, with which means for pivoting to the ground are associated.

8. The gate according to claims 1 and 7, **characterized in that** said means for pivoting to the ground are constituted by a bearing that rotatably connects said cover to a plate that can be fixed to the ground by means of appropriately provided fixing means.

9. The gate according to claims 1 and 8, **characterized in that** said gearmotor is constituted by a casing, which is preferably approximately cylindrical and has such dimensions that it can be accommodated within said hollow shaft, and within which an electric motor is accommodated which is adapted to actuate a first epicyclic gear system, which is connected, on the opposite side with respect to said electric motor, to a release stage, which constitutes said release means and in turn is connected to a second epicyclic gear system, to the output shaft of which a toothed rotating shaft is connected which protrudes axially from said casing.

10. The gate according to claims 1 and 9, **characterized in that** said release stage comprises a disk-like element, which is jointly connected for rotation to the output stage of said first epicyclic gear system and has one or more teeth that protrude at right angles thereto on the opposite side with respect to said first epicyclic gear system, said disk-like element being rotatably and freely associated with a toothed rotating secondary shaft, which transmits motion to the input stage of said second epicyclic gear system, said rotating secondary shaft supporting a disk, which can be jointly connected for rotation to said rotating shaft and can slide longitudinally with respect to it and has one or more slots that are suitable for the detachable insertion of said one or more teeth, in order to selectively jointly rotationally connect for rotation said disk-like element and said disk.

11. The gate according to claims 1 and 10, **characterized in that** the perimetric edge of said disk is slidingly and freely associated within an appropriately provided annular slot formed in the inner lateral surface of a first ring, which is arranged coaxially to said disk, from the outer lateral surface of which at least one pin protrudes radially outward and is optionally associated rotatably with said first ring, which is slidingly positioned on a guide or slot, which is formed, along an axis that is inclined with respect to the longitudinal axis of said rotating shaft, on the lateral surface of a second ring, which is arranged coaxially to said first ring, means being provided in order to impart a rotation to said second ring, with respect to said first ring, and cause the sliding of said at least one pin in said respective guide or slot, and the consequent translational motion of said disk, longitudinally with respect to said rotation shaft, in order to engage or disengage said teeth of said disk-like element in said slots of said disk.

12. The gate according to claims 1 and 11, **characterized in that** said means for imparting a rotation to said second ring with respect to said first ring are constituted by a protrusion that protrudes from the outer lateral surface of said second ring, against which the free end of the shank of a second screw abuts, said second screw being associated rotatably in a first seat provided in said casing, its rotation in an appropriate direction causing the advancement thereof toward said protrusion, so as to push said protrusion in the opposite direction with respect to said screw and cause the rotation of said second ring with respect to said first ring.

13. The gate according to claims 1 and 12, **characterized in that** the advancement of said protrusion in the opposite direction with respect to said screw is contrasted by appropriately provided elastic means, preferably constituted by a spring inserted in an appropriately provided receptacle formed in said casing.

14. The gate according to one or more of the preceding claims, **characterized in that** on said casing, proximate to said rotating shaft, there is a flange that is suitable for fixing said gearmotor to a preferably flat plate, in which there is a through opening adapted to allow the passage of said rotating shaft.

15. The gate according to claim 14, **characterized in that** said plate can be fixed to said flange by means of appropriately provided third screws, which can be inserted in appropriately provided first holes formed therein.

16. The gate according to one or more of the preceding claims, **characterized in that** said plate is shaped so that when the gearmotor is associated therewith it can be fixed so as to close the upper end of said hollow shaft, with said gearmotor arranged within it, in said condition said rotating shaft protruding longitudinally from said hollow shaft at said upper end thereof.

17. The gate according to claim 16, **characterized in that** said plate, with said gearmotor associated therewith, can be fixed to said upper end of said hollow shaft by way of third screws which can be inserted in appropriately provided second holes formed in said plate, which can be screwed in complementarily threaded second seats provided at said upper end of said hollow shaft.

18. The gate according to one or more of the preceding claims, **characterized in that** on the lateral surface of said hollow shaft there is a third hole in such a position as to face, during use, the inlet of said first seat, said hole being adapted to allow the insertion of an appropriately provided wrench or lever in said first seat, for the actuation of said second screw.

19. The gate according to one or more of the preceding claims, **characterized in that** it comprises means for keying the free end of said rotating shaft to said fixed structure.

20. The gate according to claim 19, **characterized in that** said keying means are constituted by an appropriately provided arm, which can be fixed, at a first end, approximately at right angles to said fixed structure and has, at a second end, a third seat, which is approximately shaped complementarily, in plan view, with respect to said toothed rotating shaft, within which the latter can be inserted and fixed.
